# EUROPÄISCHE PATENTANMELDUNG

(11) **EP 1 213 239 A2**
(43) Veröffentlichungstag der Anmeldung: **12.06.2002**
(21) Anmeldenummer: 00125657.7
(22) Anmeldetag: 23.11.2000
(51) Int. Cl.: B65G 17/34

(54) **Vorrichtung zum Fördern und Sortieren von Stückgütern**

(30) Priorität: 16.10.2000 EP 00122526
(71) Anmelder: Siemens Schweiz AG, 8047 Zürich (CH)
(72) Erfinder: Graefer, Dominik, 78479 Reichenau (DE); Vitalini, Michele, Dr., 90453 Nürnberg (DE)

(57) **Zusammenfassung**

Für den Antrieb eines Gurtbandes einer Sortiereinheit in einer Vorrichtung zur Förderung und Sortierung von Stückgütern wird die linerare Bewegung der Sortiereinheiten in Fördererrichtung genutzt.

Der Antrieb des Gurtbandes erfolgt über eine formschlüssige Umlenkung der translatorisch linearen Bewegung der Sortiereinheiten der Fördereinrichtung in eine rotatorische Bewegung eines mit der Sortiereinheit verbundenen Zylinders und der Übertragung der Rotation des Zylinders auf einen das Gurtband führenden Zylinder.

Dadurch ergibt sich eine Verbesserung des mechanischen Antriebsmechanismus des Gurtbandes der Sortiereinheit, und zwar gleichermassen hinsichtlich eines energiegünstigeren, verschleissarmen Antriebsmechanismus und der definierten Bewegung eines höheren Stückgutgewichtes.

Auf diese Weise ist es möglich, das Gurtband der Sortiereinheit mit einem geringeren Energieaufwand anzutreiben. Gleichzeitig verringert sich der Verschleiss der mechanischen Komponenten, was zu einer höheren Lebensdauer der Sortiereinheit führt.

## Beschreibung

Die Erfindung bezieht sich auf eine Vorrichtung zum Fördern und Sortieren von Stückgütern, bei der längst einer Sortierstrecke mindestens eine Aufgabe- und/oder mindestens eine Abwurfstation angeordnet sind und bei der eine Fördereinrichtung geführt und angetrieben sowie mit aufeinanderfolgenden Sortiereinheiten ausgerüstet ist, und bei der jede Sortiereinheit ein quer zur Sortierstrecke antreibbares Gurtband aufweist.

Vorrichtungen zum Fördern und Sortieren von Stückgütern mit einer längs einer Sortierstrecke geführten Fördereinrichtung und dieser quer zur Förderrichtung laufenden hintereinander angeordneten Sortiereinheiten sind bereits allgemein bekannt. Das zu befördernde Stückgut kann von einer schräg zur Sortierstrecke befindlichen Zuführeinrichtung auf eine der vorbeigeführten Sortiereinheit bewegt werden. Dabei wird das auf der Sortiereinheit angebrachte Gurtband im Bereich der Stückgutübergabe richtungsgleich mit dem Band der Zuführeinrichtung bewegt. Bei dem Abwurf in eine Rutsche und/oder einer Übernahmestelle wird das Gurtband der Sortiereinheit quer zur Sortierstrecke in Richtung Endstelle bewegt.

Es werden heute bezüglich des Antriebs des Gurtbandes der Sortiereinheit zwei verschiedene Antriebsmechanismen unterschieden. Man findet elektromechanische und mechanische Antriebsmechanismen.

Bei den elektromechanischen Antriebsmechanismen kann die Energieübertragung berührungslos durch Induktion oder durch mechanische Elemente wie Schleifer und Schleifleitungen erfolgen. Bei den mechanischen Antriebsmechanismen wird die lineare Bewegung der Fördereinrichtung in eine Rotationsbewegung des Gurtbandes der Sortiereinheit gewandelt.

In der europäischen Patentanmeldung EP 0 930 248 A2 ist bereits die obenstehend letztgenannte Sortiereinheit mit mechanischem Antriebsmechanismus beschrieben.

Der wahlweise Antrieb der Gurtbänder der Sortiereinheiten in den Abwurfstationen erfolgt durch Kraftschluss zwischen zwei Antriebsmitteln. Im Bereich der Abwurfstationen sind jeweils erste Antriebsmittel angeordnet, die beim Passieren einer Sortiereinheit mit den an den Sortiereinheiten angebrachten zweiten Anriebsmitteln zur Zusammenwirkung bringbar sind. Die zweiten Antriebsmittel der Sortiereinheiten umfassen wenigstens ein mit dem Gurtband der betreffenden Sortiereinheit in Antriebsverbindung stehendes Reibrad. Bei den ersten Antriebsmitteln, die den Abwurfstationen der Sortierstrecke zugeordnet sind, handelt es sich um wahlweise zur reibungsschlüssigen Zusammenwirkung mit den Reibrädern der Sortiereinheiten bringbare Reibleisten, die sich in Förderrichtung erstrecken. Diese gelangen jeweils in derjenigen Abwurfstation, in der ein auf einer Sortiereinheit aufgenommenes Stückgut abgeworfen werden soll, in Kontakt mit dem Reibrad der Sortiereinheit und treiben dadurch das Reibrad beim Passieren der Abwurfstation drehend an. Auf diese Weise wird die Drehbewegung des Reibrades auf das Gurtband übertragen. Es muss genügend Energie für das Überwinden der Massenträgheit bei der Beschleunigung des Stückgutes zur Verfügung gestellt werden. Der Kontakt zwischen ersten und zweiten Antriebselement wird daher unter grossen Kraftaufwand betrieben.

Die vorbekannte Sortiereinheit hat sich bezüglich eines kostengünstigen und einfachen Aufbaus bewährt, erscheint aber im Hinblick auf folgende Punkte verbesserungsbedürftig:
a) ungewollte Wandlung von mechanischer Energie in Wärmeenergie, welche sich negativ auf die Materialeigenschaften des Antriebsmittelpaares auswirkt;
b) bedingter Verschleiss von Reibräder und Reibleisten;
c) starke Beanspruchung und Verschleiss der übrigen mechanischen Komponenten aufgrund des sehr grossen Kraftaufwandes zur Erzeugung der reibschlüssigen Verbindung;
d) stetig abnehmbarer Reibkoeffizient bedingt durch Schmutz, Umwelteinflüsse und Verschleisspartikel; und
e) sehr schwere Stückgüter können nicht zuverlässig beschleunigt und /oder definiert verzögert und zur Abwurfstation bewegt werden, da zur Überwindung der Masseträgheitsmomente die maximal zu erzeugenden Reibkräfte des Antriebmittelpaares begrenzt sind. Das Beschleunigungs- und/oder Verzögerungsverhalten von Stückgütern kann somit nicht gesteuert kalkulierbar ablaufen.

Die der Erfindung zugrundeliegenden Aufgabe besteht daher, ausgehend von dem vorerwähnten Stande der Technik, in der Verbesserung des mechanischen Antriebsmechanismus des Gurtbandes der Sortiereinheit, und zwar gleichermassen hinsichtlich eines energiegünstigeren, verschleissarmen Antriebsmechanismus und der definierten Bewegung eines höheren Stückgutgewichtes.

Diese Aufgabe wird bei einer Vorrichtung zum Fördern und Sortieren von Stückgütern der eingangs genannten Art erfindungsgemäss dadurch gelöst, dass für den wahlweisen Antrieb der Gurtbänder der Sortiereinheiten in den Abwurfstationen eine formschlüssige Umlenkung der translatorisch linearen Bewegung der Fördereinrichtung in eine rotatorische Bewegung genutzt wird.

Zur Erzeugung der formschlüssigen Umlenkung wird in einer Ausführungsform der vorliegenden Erfindung ein rotierbar gelagerter Zylinder mit mindestens einer spiralförmigen Führungsbahn und mindestens ein mit der Führungsbahn in Eingriff bringbaren Führungselement verwendet. Die Führungsbahn kann als eine in der Zylinderoberfläche verlaufende Nut oder als eine aus der Zylinderoberfläche herausragende Führungsbahn ausgeführt sein. Ist die Führungsbahn als eine in der Zylinderoberfläche verlaufende Nut ausgeführt, greift mindestens ein Führungselement in die Führungsbahn ein. Das Führungselement ist stiftartig ausgeführt. Das stiftartige Führungselement besitzt vorzugsweise kugelgelagerte Aktivierungsrollen. Es ist dadurch reibungsarm in der Führungsbahn führbar.

Ist eine Rechts/Links Bewegung des Gurtbandes der Sortiereinheit vorgesehen, umfasst der Zylinder in einer weiteren Ausführungsform mindestens zwei spiralförmige gegenläufige Führungsbahnen, die sich an mindestens zwei Stellen kreuzen. Zur Erzielung einer präzisen Führung des Führungselementes an den Kreuzungspunkten der spiralförmig gegenläufigen Führungsbahnen erweist sich die Ausgestaltung des mindestens einen stiftartigen Führungselementes als Zwillingselement als sehr vorteilhaft.

Mit diesem Zwillingselement ist gewährleistet, dass der Zylinder im Bereich der Kreuzungspunkte von zwei Führungsbahnen nicht führungslos ist. Eine weitere konstruktive Möglichkeit zur Gewährleistung einer präzisen Führung der Führungselemente an den Kreuzungspunkten der Führungsbahnen besteht in der Ausführung der Führungsbahnen in unterschiedlicher Tiefe und Breite, so dass hierbei die Verwendung eines Zwillingselementes nicht mehr zwingend erforderlich ist.

Zur gezielten und geräuscharmen Einführung des mindestens einen Führungselementes in die Führungsbahn des Zylinders ist am Anfang der Führungsbahn eine Einführhilfe vorgesehen.

Der Zylinder wird auf der Sortiereinheit mitgeführt. Das mindestens eine Führungselement ist relativ hierzu ortsfest angeordnet.
Eine wahlweise Rechts/Links Bewegung des Gurtbandes der Sortiereinheit wird dadurch erzielt, dass das mindestens eine Führungselement stationär in Bezug auf die Fahrtrichtung der Fördereinrichtung an der linken und/oder rechten Seite der Fördereinrichtung montiert sind und in Abhängigkeit eines Steuersignals in und/oder ausser Eingriff mit der Führungsbahn gestellt werden.
Der Zylinder ist drehbar auf einem Tragrohr gelagert, welches mit dem Fahrwerk der Fördereinrichtung verbunden ist. Die rotierende Bewegung des Zylinders wird mittels Riemen auf den Führungszylinder des Gurtbandes übertragen.

Um zu gewährleisten, dass der Zylinder sich nach mindestens einer Umdrehung wieder in seiner Ausgangsposition befindet und nachfolgende Führungselemente exakt in die Führungsbahn eingreifen können, ist die Führungsbahn konstruktiv so ausgeführt, dass sie an ihrem Anfang und/oder an ihrem Ende eine geringere Steigung aufweist als in ihrem mittleren Bereich, wobei der Steigungsverlauf stetig ist.

Der für die Anwendung der Sortiereinheit entsprechende Vorschub des Gurtbandes lässt sich über die Dimensionierung des Durchmessers der Riemenscheiben einstellen.

Eine Dimensionierung der Durchmesser der ersten und zweiten Riemenscheibe ist dergestalt vorgesehen, dass eine Rotationsbewegung des Zylinders einmal um die eigene Achse einen der Anwendung der Sortiereinheit entsprechenden Vorschub des Gurtbandes erzielt.

Neben der Dimensionierung der Riemenscheiben kann die Anzahl der um den Zylinder gelegten Führungsbahnen variiert werden. Mit einer mehrfach um den Zylinder gelegten Führungsbahn, lässt sich bei gleichem Gurtbandvorschub eine Verringerung der axialen Länge des Zylinders und damit der Breite des Gurtbandes erzielen. Das ermöglicht eine Ausführung der Sortiereinheit in verschiedene Baugrössen. Die axiale Länge des Zylinders ergibt sich also, zur Gewährleistung eines der jeweiligen Anwendung erforderlichen Gurtbandvorschubes, aus einem ganzzahligen Vielfachen von 360° um den Zylinder gelegten Führungsbahn.

Der Zylinder kann aber auch in einer weiteren Ausführungsvarinate mit einer Führungsbahn ausgeführt sein, die in mehrere hintereinander angeordnete Führungsbahnsegmente aufgeteilt ist. In dieser Ausführungsvariante kommen mehrere Führungselemente zum Eingriff, die den Zylinder stückweise rotieren lassen. Diese Rotation des Zylinders kann entsprechend der Kurvenform der Führungsbahnsegmente beschleunigt, mit konstanter Geschwindigkeit oder verzögert erfolgen. Damit lassen sich unterschiedliche Bewegungsprofile des Gurtbandvorschubes erzielen. Die Bewegung des Gurtbandes kann beispielsweise in drei verschiedene Bewegungsabläufe unterteilt werden. Im erste Abschnitt der Gurtbandbewegung wird das Gurtband beschleunigt, im zweiten Abschnitt mit konstanter Geschwindigkeit bewegt und im dritten Abschnitt verzögert. Zusätzlich zur kürzeren Einbaulänge des Zylinders lassen sich in dieser Ausführungsvariante verschiedene Geschwindigkeitsprofile des Gurtbandes erzielen.
Damit ist eine präzise Aufnahme und Abgabe der Stückgüter in die Auffangstationen gewährleistet.

Mit den vorgenannten Ausführungsformen ist es möglich, das Gurtband der Sortiereinheit mit einem geringeren Energieaufwand, gesteuert beschleunigt und / oder gleichförmig und/oder gesteuert verzögert anzutreiben.

Gleichzeitig verringert sich der Verschleiss der mechanischen Komponenten, was zu einer höheren Lebensdauer der Sortiereinheit führt.

Die Erfindung wird nachfolgend anhand einer Zeichnung beispielsweise näher erläutert. Dabei zeigen:
- Figur 1: Ansicht der erfindungsgemässen Vorrichtung in der Perspektive von unten
- Figur 2: Ansicht der erfindungsgemässen Vorrichtung mit Eingriff der hintereinander angeordneten Führungsstifte in Führungsbahnen gleicher Breite und Tiefe
- Figur 3: Ansicht des Nutenzylinders in einer Ausführungsvariante mit zwei Führungsbahnen mit unterschiedlicher Breite und Tiefe
- Figur 4: Alternative Ausgestaltung der Führungsbahn des Nutenzylinders in verschiedene Führungsbahnsegmente (für eine Bewegungsrichtung des Gurtbandes der Sortiereinheit in 2D-Darstellung ("abgerollt"))
- Figur 5: Verschiedene Varianten der Führungsbahn des Nutenzylinders
(für eine Bewegungsrichtung des Gurtbandes der Sortiereinheit in 2D-Darstellung ("abgerollt"))

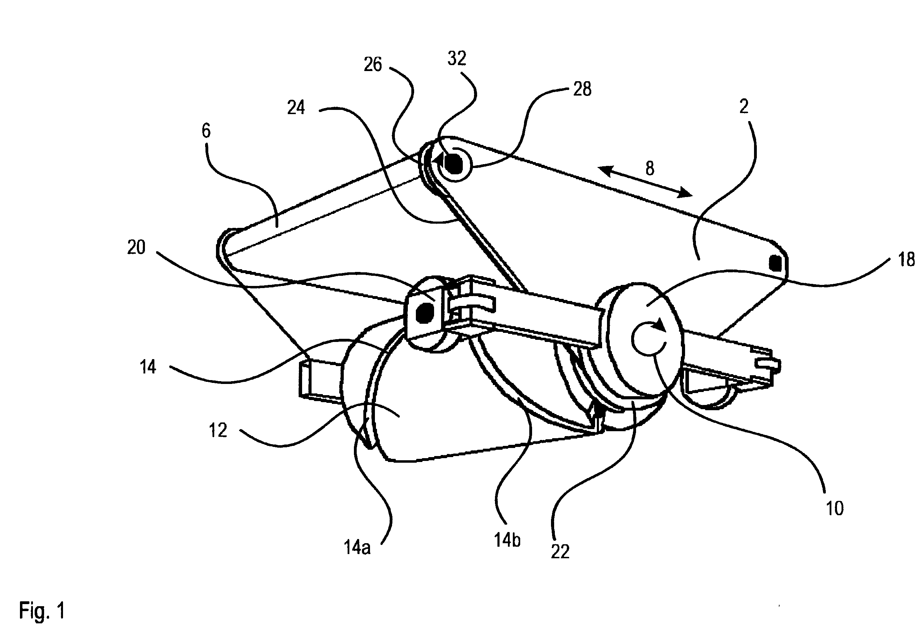

Figur 1 zeigt in schematischer Darstellung eine Sortiereinheit 2 einer Fördereinrichtung in der Perspektive von unten.
Die Sortiereinheit 2 ist in einer Fördereinrichtung mit weiteren Sortiereinheiten zu einer geschlossenen Kette verbunden. Die Sortiereinheiten 2 werden durch einen hier nicht weiter dargestellten Antrieb in Förderrichtung 4 bewegt. Diese Bewegung in Förderrichtung 4 wird für den wahlweisen Antrieb eines Gurtbandes 6 der Sortiereinheit 2 genutzt. Eine Bewegung 8 des Gurtbandes 6 der Sortiereinheit 2 verläuft quer zur Förderrichtung der hintereinander geschalteten Sortiereinheiten der Fördereinrichtung in Förderrichtung 4.
Im vorliegenden Ausführungsbeispiel ist es vorgesehen, dass zur Erzeugung der formschlüssigen Umlenkung (also zur Umwandlung der translatorisch linearen Bewegung in Förderrichtung 4 der Fördereinrichtung in eine rotatorische Bewegung 10 eines Nutenzylinders 12) ein rotierbar gelagerter Zylinder 12 mit mindestens einer spiralförmigen Führungsbahn 14 und mindestens ein mit der Führungsbahn 14 in Eingriff bringbares Führungselement 16 verwendet wird.
Die Führungsbahn 14 ist eine in der Zylinderoberfläche verlaufende Nut. Sie kann aber auch in einer anderen Ausführungsvariante als eine aus der Zylinderoberfläche herausragende Führungsbahn beschaffen sein.

Zur Erzielung der Rechts/Links-Bewegung 8 des Gurtbandes 6, sieht die in Figur 1 dargestellte Ausführungsvariante zwei spiralförmig gegenläufige Führungsbahnen 14a und 14b vor, die den Zylinder 12 umfassen. Sie kreuzen sich in dieser Ausführungsvariante an zwei Stellen, wobei die Kreuzungspunkte um 180° versetzt zueinander liegen. Der Zylinder 12 beschreibt eine 360° Drehung, damit beim nächsten Eingriff der Führungselemente 16 in die Führungsbahn 14 des Zylinders 12 die ursprüngliche Ausgangsposition wieder erreicht ist.

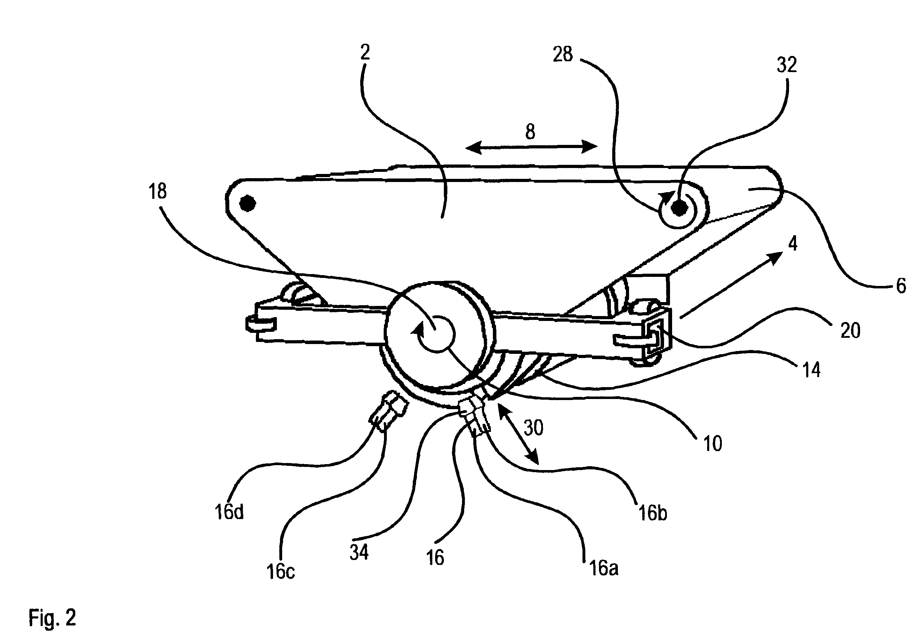

In der in Figur 1 dargestellten Ausführungsvariante greifen zwei stiftartige Führungselemente 16a und 16b bzw. 16c und 16d mittels vorzugsweise kugelgelagerten Aktivierungsrollen 34 in die Führungsbahn 14a bzw. 14b ein, die nach Eingriff führbar sind. Der Eingriff der hintereinander angeordneten Führungselemente 16a und 16b bzw. 16c und 16d in die Führungsbahn 14a bzw. 14b des Zylinders 12 ist in Figur 2 dargestellt. Es ist aber auch der Eingriff von nur einem (oder mehr als zwei) Führungselement(en) möglich. Mit den zwei hintereinander angeordneten stiftartigen Führungselementen 16a und 16b bzw. 16c und 16d ist gewährleistet, dass der Zylinder 12 im Bereich der Kreuzungspunkte der Fuhrungsbahnen 14a und 14b nicht führungslos ist. Der Abstand der Führungselemente 16a und 16b bzw. 16c und 16d ist vorzugsweise so gewählt, dass das erste Führungselement 16a bzw. 16c den Kreuzungspunkt der beiden den Zylinder 12 umfassenden Führungsbahnen 14a und 14b bereits verlassen hat, bevor das zweite Führungselement 16b bzw. 16d den Kreuzungspunkt erreicht. Zum sicheren und geräuscharmen Einführen der Führungselemente 16a und 16b bzw. 16c und 16d in die Führungsbahn 14a bzw. 14b des Zylinders 12 ist eine Einführhilfe vorgesehen.

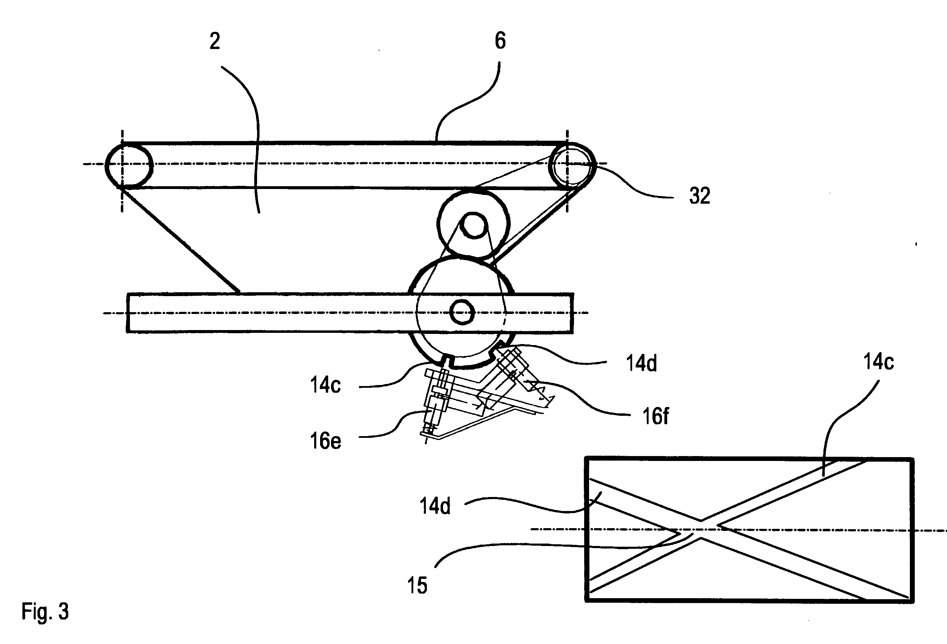

Eine weitere konstruktive Möglichkeit zur Gewährleistung einer präzisen Führung der Führungselemente an den Kreuzungspunkten der Führungsbahnen ist in der Figur 3 gezeigt. Sie besteht in der Ausführung von Führungsbahnen 14c und 14d in unterschiedlicher Tiefe und Breite. So kann beispielsweise die erste Führungsbahn 14c schmaler und tiefer ausgeführt sein und die zweite Führungsbahn 14d breiter und weniger tief im Vergleich zur ersten Führungsbahn 14c. Entsprechend geformte Führungselemente 16e,16f besitzen für diese Ausführungsform eine den Führungsbahnen 14c, 14d angepasste konstruktive Gestaltung. In dieser Ausführungsvariante kann somit pro Führungsbahn 14c, 14d nur ein Führungselement 16e, 16f vorgesehen werden, das entsprechend der Breite und Tiefe der jeweiligen Führungsbahn 14c, 14d ausgeführt ist.

Wie aus der Figur 1 ersichtlich ist, besteht eine ortsfeste Verbindung des Zylinders 12 und der Sortiereinheit 2. Der Zylinder 12 wird daher mit der Sortiereinheit 2 bewegt. Die Führungselemente 16a und 16b bzw. 16c und 16d sind dahingegen stationär montiert. Die Führungselemente 16 sind an der linken und/oder rechten Seite der Fördereinrichtung montiert, damit die Rechts/Links-Bewegung 8 des Gurtbandes 6 wahlweise zu einer der beiden Seiten ermöglicht wird.

Der Zylinder 12 ist drehbar auf einem Tragrohr 18 gelagert, welches wiederum mit einem Fahrwerk 20 der Fördereinrichtung verbunden ist. An dem Zylinder 12 ist fest eine Riemenscheibe 22 montiert, die über einen Zahnriemen 24 eine weitere Riemenscheibe 26 antreibt, die ihrerseits fest an einem Führungszylinder 32 des Gurtbandes 6 montiert ist. Dadurch kommt es zur Bewegungsübertragung der Drehbewegung des Nutenzylinders 12 auf die Drehbewegung 28 des Gurtbandführungszylinders 32 und damit zur Bewegung 8 des Gurtbandes 6.

Je nach beabsichtigter Drehrichtung 8 des Gurtbandes 6 der Sortiereinheit 2 werden in Abhängigkeit eines Steuersignales entsprechend die in Bewegungsrichtung der Fördereinrichtung linken oder rechten Führungselemente 16a und 16b bzw. 16c und 16d in Eingriff gestellt. Diese Bewegung ist in der Figur 2 anhand von Pfeilen 30 dargestellt.

Die Führungselemente 16a und 16b bzw 16c und 16d in der in Figur 2 dargestellten Ausführungsvariante bewirken, bei der fortlaufenden linearen Bewegung in Förderrichtung 4 der Fördereinrichtung eine Rotation des Zylinders um 360°. Diese Rotation wird entsprechend der Übersetzung in eine Drehung des Gurtbandes 6 der Sortiereinheit 2 umgesetzt.

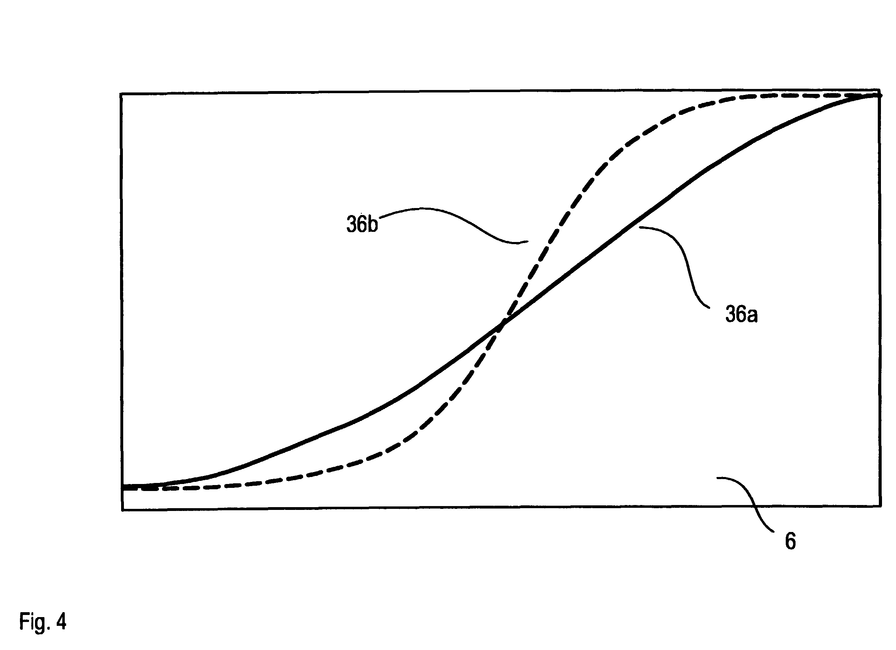

Die Figur 4 zeigt eine besonders vorteilhafte Ausgestaltung der Führungsbahn 14 eines Nutenzylinders für die Bewegung des Gurtbandes 6 der Sortiereinheit 2 in eine Richtung in der Gestalt, dass sie an ihrem Anfang und/oder an ihrem Ende eine geringere Steigung aufweisen als in ihrem mittleren Bereich, wobei der Steigungsverlauf stetig ist. Damit wird ermöglicht, dass der Zylinder nach einer 360° Drehung und nach Ausklinken der Führungselemente 16 in dieser Position stehen bleibt und ein Nachdrehen des Zylinders vermieden wird. Die nachfolgend angeordneten Führungselemente einer der folgenden Sortiereinheiten 2, die zum Eingriff kommen, können somit wieder in die Anfangsposition der Führungsbahn 14 des Nutenzylinders 12 eingreifen. Wie in Figur 4 dargestellt, kann der Kurvenverlauf der Führungsbahn entsprechend der erforderlichen Bewegung des Gurtbandes flach 36a oder steiler 36b ausgeführt sein.

Zum Abwurf der Stückgüter in die einzelnen Abwurfstationen ist es notwendig, dass sich das Gurtband 6 der Sortiereinheit 2 entsprechend mit dem der jeweiligen Anwendung erforderlichen Gurtbandvorschubes bewegt. Dazu wird der Durchmesser der beiden Riemenscheiben 22 und 26 so dimensioniert, dass der notwendigen Vorschub des Gurtbandes 6 der Sortiereinheit 2, bei einer Rotationsbewegung des Nutenzylinders 12 einmal um die eigene Achse gewährleistet ist. Somit wird eine präzise Aufnahme der Stückgüter auf die Fördereinrichtung und Abgabe der Stückgüter in die Auffangstationen realisiert.
In alternativer Ausgestaltung kann die axiale Länge des Zylinders 12 zur Gewährleistung eines der jeweiligen Anwendung erforderlichen Gurtbandvorschubes aus einem ganzzahligen Vielfachen von 360° um den Zylinder 12 gelegten Führungsbahn 14 bestimmt werden. Das bedeutet, dass sich durch eine mehrfach um den Zylinder gelegte Führungsbahn bei Gewährleistung des gleichen Gurtbandvorschubes die axiale Länge des Zylinders verringern lässt. Damit kann einerseits eine kleine Baugrösse des Zylinders 12 realisiert sein. Andererseits kann die Breite der Sortiereinheit 2 verringert werden.

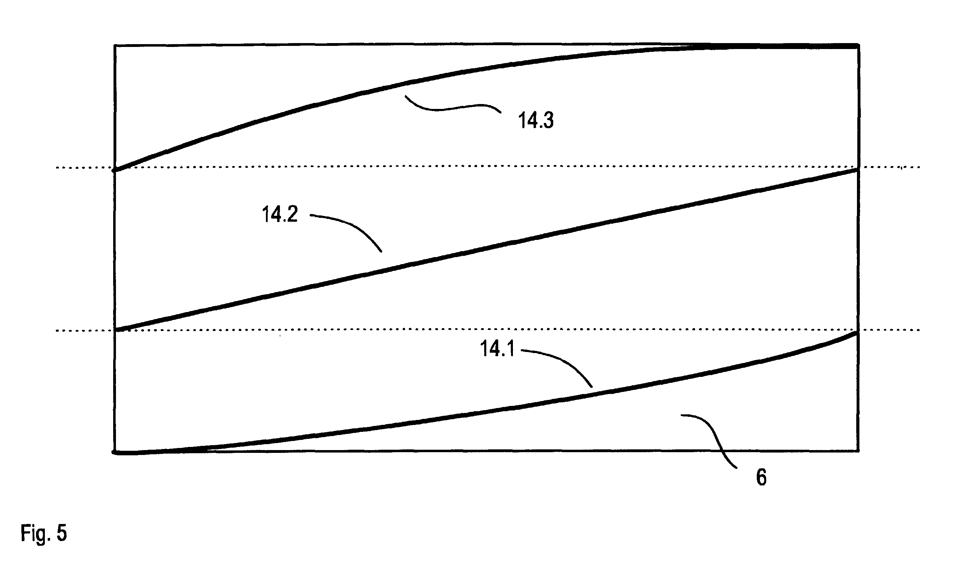

Eine weitere alternative Ausgestaltung der Führungsbahn des Zylinders zeigt Figur 5. Die Führungsbahn 14 ist hier in verschiedene Führungsbahnsegmente 14.1, 14.2, 14.3 aufgeteilt. In dieser Ausführungsvariante kommen mehrere Führungselemente zum Eingriff, die den Zylinder stückweise rotieren lassen. Diese Rotation des Zylinders kann entsprechend der Kurvenform der Führungsbahnsegmente beschleunigt, mit konstanter Geschwindigkeit oder verzögert erfolgen. Die axiale Länge des Zylinders 12 lässt sich somit verringern und es lassen sich verschiedene Geschwindigkeitsprofile des Gurtbandes 8 der Sortiereinheit 2 realisieren.

### Liste der verwendeten Bezugszeichen

- 2: Sortiereinheit
- 4: Bewegungsverlauf in Förderrichtung (translatorisch lineare Bewegung der Fördereinrichtung)
- 6: Gurtband
- 8: Links/Rechtsbewegung des Gurtbandes der Sortiereinheit
- 10: Rotatorische Bewegung des Nutenzylinders
- 12: Nutenzylinder
- 14: Führungsbahn
- 14a: Erste Führungsbahn
- 14b: Zweite Führungsbahn
- 14c: Dritte Führungsbahn
- 14d: Vierte Führungsbahn
- 14.1: Erstes Führungsbahnsegment
- 14.2: Zweites Führungsbahnsegment
- 14.3: Drittes Führungsbahnsegment
- 15: Kreuzungspunkt der Führungsbahnen 14c und 14d
- 16: Führungselement
- 16a: Erstes Führungselement
- 16b: Zweites Führungselement
- 16c: Drittes Führungselement
- 16d: Viertes Führungselement
- 16e: Führungselement der Führungsbahn 14c
- 16f: Führungselement der Führungsbahn 14d
- 18: Tragrohr
- 20: Fahrwerk der Fördereinrichtung
- 22: Erste Riemenscheibe
- 24: Riemen
- 26: Zweite Riemenscheibe
- 28: Bewegung des Gurtbandführungszylinders
- 30: Bewegung der Führungselemente in und aus der Führungsbahn
- 32: Gurtbandführungszylinder
- 34: Kugelgelagerte Aktivierungsrollen der Führungselemente
- 36a: Beispiel eines flacher Verlaufes der Führungsbahn 14
- 36b: Beispiel eines steilen Verlaufes der Führungsbahn 14

## Patentansprüche

1. Vorrichtung zum Fördern und Sortieren von Stückgütern, bei der längst einer Sortierstrecke mindestens eine Aufgabe- und/oder mindestens eine Abwurfstation angeordnet sind und bei der eine Fördereinrichtung geführt und angetrieben sowie mit aufeinanderfolgenden Sortiereinheiten (2) ausgerüstet ist, und bei der jede Sortiereinheit (2) ein quer zur Sortierstrecke antreibbares Gurtband (6) aufweist
**dadurch gekennzeichnet, dass**
für den Antrieb des Gurtbandes (6) eine formschlüssige Umlenkung der translatorisch linearen Bewegung (4) der Fördereinrichtung in eine rotatorische Bewegung (10) genutzt wird.

2. Vorrichtung nach Anspruch 1,
**dadurch gekennzeichnet, dass**
zur Erzeugung der formschlüssigen Umlenkung ein rotierbar gelagerter Zylinder (12) mit mindestens einer spiralförmigen Führungsbahn (14) und mindestens ein mit der Führungsbahn in Eingriff bringbares Führungselement (16) vorgesehen sind.

3. Vorrichtung nach Anspruch 2,
**dadurch gekennzeichnet, dass**
die Führungsbahn (14) als in der Zylinderoberfläche verlaufende Nut oder als aus der Zylinderoberfläche herausragende Führungsbahn ausgeführt ist.

4. Vorrichtung nach Anspruch 2 oder 3,
**dadurch gekennzeichnet, dass**
das mindestens eine Führungselement (8) stiftartig ausgeführt und mittels einer vorzugsweise kugelgelagerten Aktivierungsrolle (34) in der Führungsbahn (14) führbar ist.

5. Vorrichtung nach einem der Ansprüche 2 bis 4,
**dadurch gekennzeichnet, dass**
der Zylinder (12) mindestens zwei spiralförmige gegenläufige Führungsbahnen (14) umfasst, die sich an mindestens zwei Stellen kreuzen.

6. Vorrichtung nach einem der Ansprüche 2 bis 5,
**dadurch gekennzeichnet, dass**
der Zylinder (12) auf der Sortiereinheit (2) mitgeführt ist und das das mindestens eine Führungselement (16) relativ hierzu ortsfest angeordnet ist.

7. Vorrichtung nach Anspruch 6,
**dadurch gekennzeichnet, dass**
der Zylinder (12) drehbar auf einem Tragrohr (18) gelagert ist.

8. Vorrichtung nach Anspruch 7,
**dadurch gekennzeichnet, dass**
das Tragrohr (18) mit dem Fahrwerk (20) der Fördereinrichtung verbunden ist.

9. Vorrichtung nach einem der Ansprüche 2 bis 8,
**dadurch gekennzeichnet, dass**
der Zylinder (12) fest mit einer ersten Riemenscheibe (22) verbunden ist, die wiederum über einen Riemen (24) eine zweite Riemenscheibe (26) antreibt, die fest an einem Führungszylinder (32) für das Gurtband (6) montiert ist.

10. Vorrichtung nach Anspruch 9,
**dadurch gekennzeichnet, dass**
sich der Durchmesser der zweiten Riemenscheibe (26) des Führungszylinders (32) aus dem Durchmesser der ersten Riemenscheibe (22), der Länge des Zylinders (12) und der Länge des Gurtbandes (6) ergibt.

11. Vorrichtung nach Anspruch 10,
**dadurch gekennzeichnet, dass**
eine Dimensionierung der Durchmesser der ersten (22) und zweiten Riemenscheibe (26) dergestalt vorgesehen ist, dass eine Rotationsbewegung des Zylinders (12) einmal um die eigene Achse einen der Anwendung entsprechenden Vorschub des Gurtbandes (6) erzielt.

12. Vorrichtung nach einem der Ansprüche 2 bis 11,
**dadurch gekennzeichnet, dass**
am Anfang der Führungsbahn eine Einführhilfe für das mindestens eine Führungselement (16) vorgesehen ist.

13. Vorrichtung nach einem der Ansprüche 2 bis 12,
**dadurch gekennzeichnet, dass**
das mindestens eine Führungselement (16) stationär in Bezug auf die Fahrtrichtung der Fördereinrichtung (4) an der linken und/oder rechten Seite der Fördereinrichtung montiert sind und in Abhängigkeit eines Steuersignals in und/oder ausser Eingriff mit der Führungsbahn (14) bringbar sind.

14. Vorrichtung nach einem der Ansprüche 2 bis 13,
**dadurch gekennzeichnet, dass**
je nach beabsichtigter Drehrichtung des Gurtbandes (6) die in Fahrtrichtung des an der linken und/oder rechten Seite der Fördereinrichtung montierten Führungselements (16) in Eingriffsposition stellbar sind.

15. Vorrichtung nach einem der Ansprüche 1 bis 13,
**dadurch gekennzeichnet, dass**
die Führungsbahn an ihrem Anfang und/oder an ihrem Ende eine geringere Steigung aufweist als in ihrem mittleren Bereich, wobei der Steigungsverlauf stetig ist.

16. Vorrichtung nach einem der Ansprüche 2 bis 15,
**dadurch gekennzeichnet, dass**
das mindestens eine stiftartige Führungselement (16) bei gleicher Tiefe und Breite der Führungsbahnen als Zwillingselement ausgestaltet ist.

17. Vorrichtung nach einem der Ansprüche 2 bis 15,
**dadurch gekennzeichnet, dass**
die Führungsbahnen (14c, 14d) in unterschiedlicher Tiefe und Breite ausgeführt sind.

18. Vorrichtung nach Anspruch 17,
**dadurch gekennzeichnet, dass**
die Führungselemente (16e, 16f) entsprechend der Breite und / oder Tiefe der Führungsbahnen (14c, 14d) ausgeführt sind.

19. Vorrichtung nach einem der Ansprüche 2 bis 13,
**dadurch gekennzeichnet, dass**
sich die axiale Länge des Zylinders (12) zur Gewährleistung eines der jeweiligen Anwendung erforderlichen Gurtbandvorschubes aus einem ganzzahligen Vielfachen von 360° um den Zylinder (12) gelegten Führungsbahn (14) ergibt.

20. Vorrichtung nach einem der Ansprüche 2 bis 18,
**dadurch gekennzeichnet, dass**
eine Führungsbahn in mehrere Führungsbahnsegmente aufgeteilt ist.
